# EUROPEAN PATENT APPLICATION

(11) **EP 4 704 208 A1**
(43) Date of publication of application: **04.03.2026**
(21) Application number: 23941221.6
(22) Date of filing: 06.09.2023
(51) Int. Cl.: H01M 10/0567, H01M 10/0525

(54) **ELECTROLYTE AND BATTERY**

(30) Priority: 12.06.2023 CN 202310691355; 12.06.2023 CN 202310691354
(71) Applicant: Guangzhou Tinci Materials Technology Co., Ltd, Guangzhou, Guangdong 510760 (CN); Jiujiang Tinci Materials Technology Co., Ltd., Jiujiang, Jiangxi 332500 (CN)
(72) Inventor: ZHENG, Ning, Guangzhou, Guangdong 510700 (CN); FAN, Weizhen, Guangzhou, Guangdong 510700 (CN); ZHOU, Meng, Guangzhou, Guangdong 510700 (CN); GUO, Juan, Guangzhou, Guangdong 510700 (CN); SHI, Litao, Guangzhou, Guangdong 510700 (CN); FAN, Chaojun, Guangzhou, Guangdong 510700 (CN)
(74) Representative: IPAZ
(86) International application number: PCT/CN2023/117350
(87) International publication number: WO 2024/254996

(57) **Abstract**

An electrolytic solution and a battery. The electrolytic solution is provided. The electrolytic solution includes an additive, and the additive has a structure as shown in formula 1. The provided phosphate electrolytic solution additive has a three-dimensional skeleton structure as shown in formula 1. It can not only participate in the formation of an SEI film, but also construct cavity channels during the film-forming process, increase the porosity of the SEI film, which is beneficial for improving the ion transport efficiency, reducing the influence of temperature on the ion transport efficiency, and thereby improving the high-temperature and low-temperature performance of the battery.

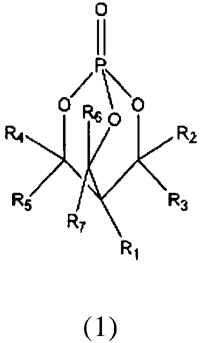

## Description

The present application claims the priority to Chinese Patent Application No. 2023106913559, titled "ELECTROLYTIC SOLUTION AND BATTERY", filed before the China National Intellectual Property Administration on June 12, 2023, and claims the priority to Chinese Patent Application No. 2023106913544, titled "ELECTROLYTIC SOLUTION AND BATTERY", filed before the China National Intellectual Property Administration on June 12, 2023, which are incorporated herein by reference in their entirety.

### TECHNICAL FIELD

The present application relates to an electrolytic solution and a battery, and relates to the technical field of batteries.

### BACKGROUND

Battery has been widely used as an energy supply device. As one of the important components of a battery, an electrolytic solution includes a non-aqueous solvent, an electrolyte, and an additive. A suitable additive can effectively improve the performance of the battery.

Phosphate compounds have been widely recognized by those skilled in the art as electrolytic solution additives. For example, the Chinese Invention Patent Publication No. CN114899490A provides a cyclic phosphate additive including an unsaturated five-membered cyclic phosphate and its derivatives, which helps to improve the room-temperature cycle performance, high-temperature cycle performance, and high-temperature storage performance of a lithium-ion battery; the Chinese Invention Patent Publication No. CN114824484A provides a cyclic phosphate electrolytic solution additive, which helps to improve the room-temperature cycle performance and initial coulombic efficiency of a lithium-ion battery; the Chinese Invention Patent Publication No. CN115377495A provides a phosphate additive, which helps to improve the room-temperature cycle stability of a lithium-ion battery with a high-nickel ternary/silicon-carbon system; the Chinese Patent Publication No. CN115832436A provides an electrolytic solution capable of balancing high-temperature and low-temperature performance, which improves the low-temperature rate discharge performance, as well as room-temperature and high-temperature cycle life of the battery through the combined action of a triphenyl phosphoranylidene compound and a compound having a carbonyl group. How to improve the high-temperature and low-temperature performance of a battery through a single-component phosphate compound is one of the research directions for those skilled in the art.

### SUMMARY

The present application provides an electrolytic solution, which helps to improve the high-temperature and low-temperature performance of a battery.

The present application also provides a battery, including the aforementioned electrolytic solution.

A first aspect of the present application provides an electrolytic solution, including a first additive, and the first additive has the structure shown in formula 1: 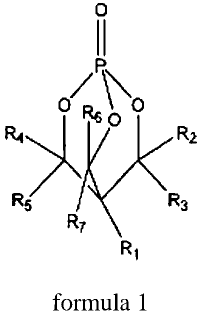 in formula 1, R₁ is selected from the group consisting of H, halogen, phenyl, alkylene-phenyl, substituted or unsubstituted C1 to C10 saturated hydrocarbon group, substituted or unsubstituted C2 to C10 alkenyl, and substituted or unsubstituted C2 to C10 alkynyl, and the substituent is selected from the group consisting of hydroxyl, halogen, and a combination thereof; R₂, R₃, R₄, R₅, R₆, and R₇ are independently selected from the group consisting of H, halogen, C1 to C10 saturated hydrocarbon group, C2 to C10 alkenyl, C2 to C10 alkynyl, halogen-substituted C1 to C10 saturated hydrocarbon group, halogen-substituted C2 to C10 alkenyl, and halogen-substituted C2 to C10 alkynyl.

In the electrolytic solution as described above, R₁ is selected from the group consisting of alkylene-phenyl, substituted or unsubstituted C1 to C10 saturated hydrocarbon group, substituted or unsubstituted C2 to C10 alkenyl, and substituted or unsubstituted C2 to C10 alkynyl, and the substituent is selected from the group consisting of hydroxyl, halogen, and a combination thereof.

In the electrolytic solution as described above, R₁ is selected from the group consisting of substituted or unsubstituted C2 to C4 saturated hydrocarbon group, C2 to C4 alkenyl, and C2 to C4 alkynyl, and the substituent is selected from the group consisting of hydroxyl, halogen, and a combination thereof.

In the electrolytic solution as described above, the R₂, R₃, R₄, R₅, R₆, and R₇ are independently selected from the group consisting of H, C1 to C10 saturated hydrocarbon group, and halogen-substituted C1 to C10 hydrocarbon group.

In the electrolytic solution as described above, the first additive is selected from the group consisting of compounds shown in formula 1-1 to formula 1-13, and a combination thereof:

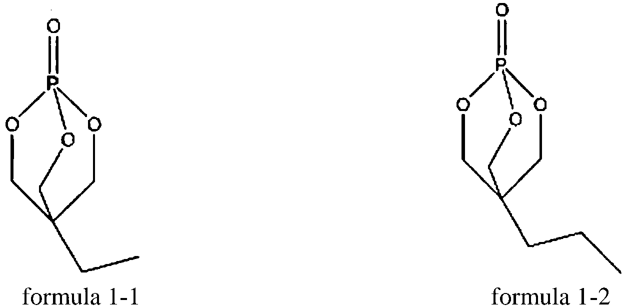

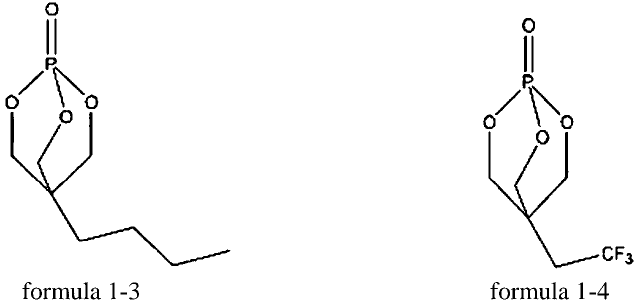

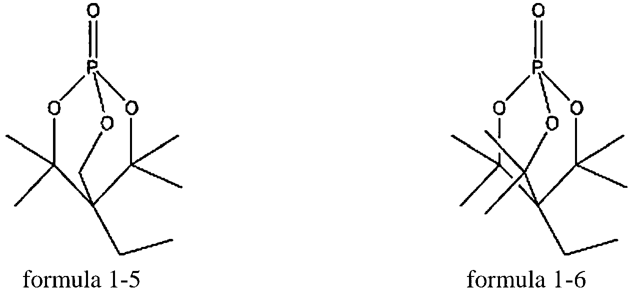

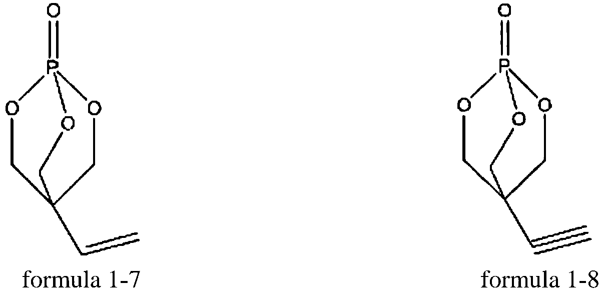

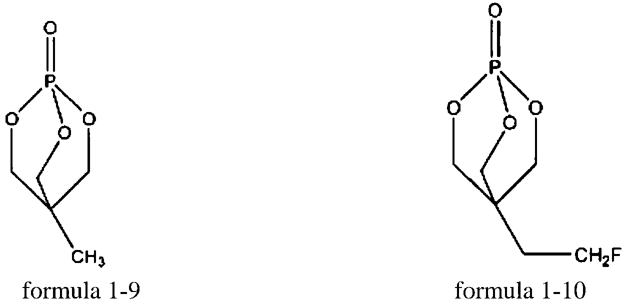

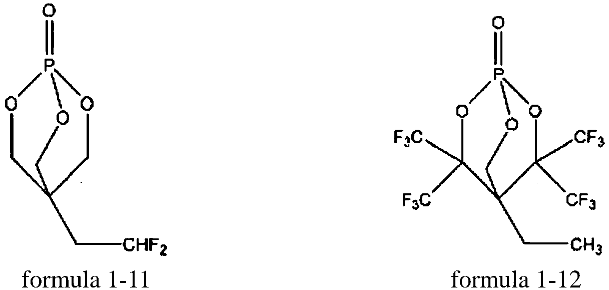

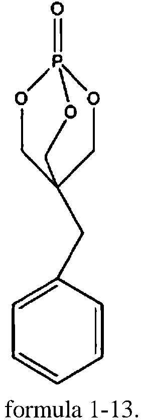

The electrolytic solution as described above, a mass percentage of the first additive ranges from 0.1% to 10% of a total mass of the electrolytic solution.

The electrolytic solution as described above, further including a second additive, and the second additive is selected from the group consisting of vinylene carbonate, ethylene sulfate, vinyl ethylene carbonate, 1,3-propanesultone, fluoroethylene carbonate, and a combination thereof.

The electrolytic solution as described above, a mass ratio of the first additive to the second additive ranges from 1:0.1 to 1:3.0.

The electrolytic solution as described above, further including a non-aqueous organic solvent and a lithium salt.

The electrolytic solution as described above, the lithium salt is selected from the group consisting of an inorganic lithium salt, a lithium carboxylate, a lithium sulfonate, a lithium imide, a methylated lithium salt, a lithium borate, a lithium oxalate, a fluorine-containing organic lithium salt, and a combination thereof.

The electrolytic solution as described above, a concentration of the lithium salt ranges from 0.5 M to 2 M.

The electrolytic solution as described above, the non-aqueous organic solvent is selected from the group consisting of a carbonate compound, a carboxylate compound, an ether compound, a sulfone compound, and a combination thereof.

The electrolytic solution as described above, further including a third additive, and the third additive is selected from the group consisting of a film-forming additive, a conductive additive, a flame retardant additive, an overcharge protection additive, an additive for improving high-temperature and low-temperature performance, and a combination thereof.

A second aspect of the present application provides a battery, including any one of the electrolytic solutions described above.

The phosphate electrolytic solution additive provided by the present application has a three-dimensional skeleton structure as shown in formula 1. It can not only participate in the formation of the SEI film, but also construct cavity channels during the film-forming process, increase the porosity of the SEI film, which is beneficial for improving the ion transport efficiency, reducing the influence of temperature on the ion transport efficiency, and thereby improving the high-temperature and low-temperature performance of the battery.

### BRIEF DESCRIPTION OF THE DRAWINGS

In order to more clearly illustrate the technical solutions in the embodiments of the present application or the prior art, the following will briefly introduce the drawings needed for describing the embodiments or the prior art. Obviously, the drawings in the following description are some embodiments of the present application. For those of ordinary skill in the art, other drawings can also be obtained based on these drawings without any creative effort.
FIG. 1 is an H NMR spectrum of the electrolytic solution additive shown in formula 1-1 provided by Example 1 of the present application;
FIG. 2 is a P NMR spectrum of the electrolytic solution additive shown in formula 1-1 provided by Example 1 of the present application.

### DETAILED DESCRIPTION

In order to make the objectives, technical solutions, and advantages of the present application clearer, the following will combine the embodiments of the present application to clearly and completely describe the technical solutions in the embodiments of the present application. Obviously, the described embodiments are only a part of the embodiments of the present application, and not all of them. Based on the embodiments in the present application, all other embodiments obtained by those of ordinary skill in the art without creative effort shall fall within the scope of protection of the present application.

A first aspect of the present application provides an electrolytic solution, including an additive, and the additive has a structure shown in formula 1: 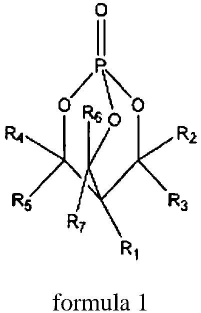 in formula 1, R₁ is selected from the group consisting of H, halogen, phenyl, alkylene-phenyl, substituted or unsubstituted C1 to C10 saturated hydrocarbon group, substituted or unsubstituted C2 to C10 alkenyl, and substituted or unsubstituted C2 to C10 alkynyl, and the substituent is selected from the group consisting of hydroxyl, halogen, and a combination thereof; R₂, R₃, R₄, R₅, R₆, and R₇ are each independently selected from the group consisting of H, halogen, C1 to C10 saturated hydrocarbon group, C2 to C10 alkenyl, C2 to C10 alkynyl, halogen-substituted C1 to C10 saturated hydrocarbon group, halogen-substituted C2 to C10 alkenyl, and halogen-substituted C2 to C10 alkynyl.

In the present application, the saturated hydrocarbon group refers to an alkyl group having the corresponding number of carbon atoms, with the general structural formula -CₙH₂ₙ₊₁. When an alkyl group with a specific carbon number is specified, it includes all geometric isomers having that carbon number. For example, the saturated hydrocarbon group is selected from the group consisting of methyl, ethyl, n-propyl, isopropyl, cyclopropyl, n-butyl, isobutyl, sec-butyl, tert-butyl, cyclobutyl, n-pentyl, isopentyl, neopentyl, cyclopentyl, methylcyclopentyl, ethylcyclopentyl, n-hexyl, isohexyl, cyclohexyl, n-heptyl, octyl, and the like. Furthermore, any H atom in the saturated hydrocarbon group can be substituted.

In the present application, the alkenyl refers to an unsaturated hydrocarbon group having the corresponding number of carbon atoms and containing one or more carbon-carbon double bond(s). For example, the alkenyl is selected from the group consisting of vinyl, n-propenyl, isopropenyl, n-but-2-enyl, but-3-enyl, n-hex-3-enyl, an aromatic hydrocarbon group, and the like. Furthermore, any H atom in the alkenyl can be substituted.

In the present application, the alkynyl refers to an unsaturated hydrocarbon group having the corresponding number of carbon atoms and containing one or more carbon-carbon triple bond(s). For example, the alkynyl is selected from the group consisting of ethynyl, n-propynyl, isopropynyl, n-but-2-ynyl, but-3-ynyl, n-hex-3-ynyl, and the like. Furthermore, any H atom in the alkenyl can be substituted.

In the present application, the alkylene refers to a saturated linear or branched divalent group having the corresponding number of carbon atoms and derived from the corresponding alkane by removal of two hydrogen atoms. Alkylene-phenyl refers to an alkylene connected to an aryl group.

The phosphate electrolytic solution additive provided by the present application has a three-dimensional skeleton structure as shown in formula 1. It can not only participate in the formation of the SEI film, but also construct cavity channels during the film-forming process, increase the porosity of the SEI film, which is beneficial for improving the ion transport efficiency, reducing the influence of temperature on the ion transport efficiency, and thereby improving the high-temperature and low-temperature performance of the battery.

In one specific embodiment, R₁ is selected from the group consisting of alkylene-phenyl, substituted or unsubstituted C1 to C10 saturated hydrocarbon group, substituted or unsubstituted C2 to C10 alkenyl, and substituted or unsubstituted C2 to C10 alkynyl, and the substituent is selected from the group consisting of hydroxyl, halogen, and a combination thereof.

In one specific embodiment, R₁ is selected from the group consisting of substituted or unsubstituted C2 to C4 saturated hydrocarbon group, C2 to C4 alkenyl, and C2 to C4 alkynyl, and the substituent is selected from the group consisting of hydroxyl, halogen, and a combination thereof.

In one specific embodiment, R₂, R₃, R₄, R₅, R₆, and R₇ are each independently selected from the group consisting of H, C1 to C10 saturated hydrocarbon group, and halogen-substituted C1 to C10 hydrocarbon group.

Further, the additive is selected from the group consisting of compounds shown in formula 1-1 to formula 1-13, and a combination thereof:

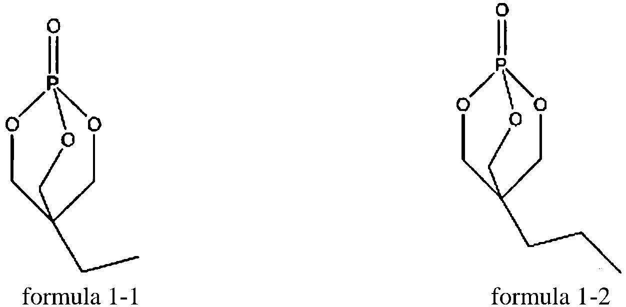

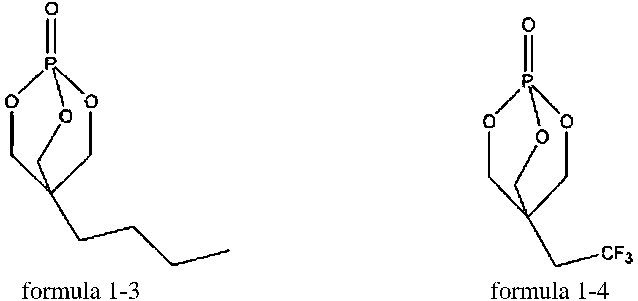

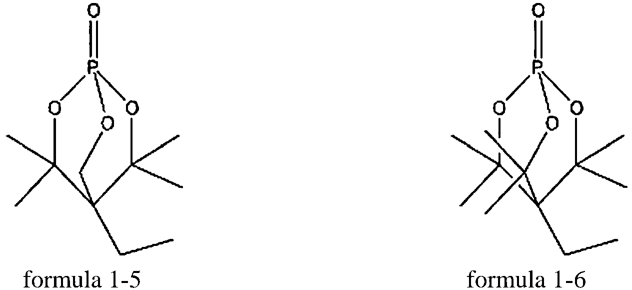

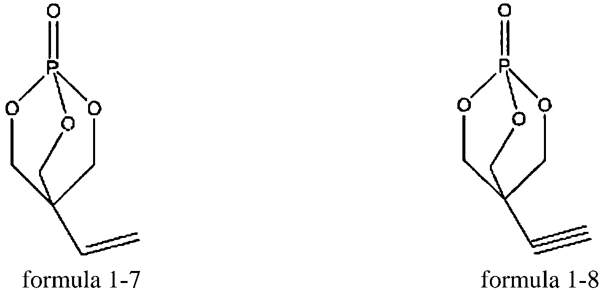

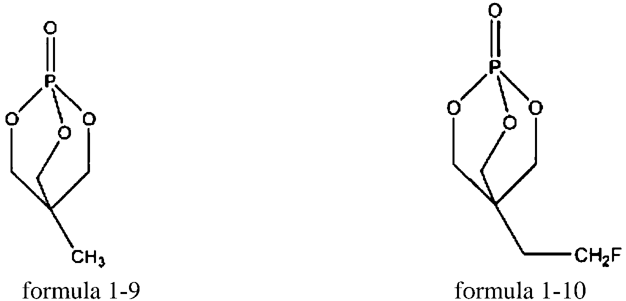

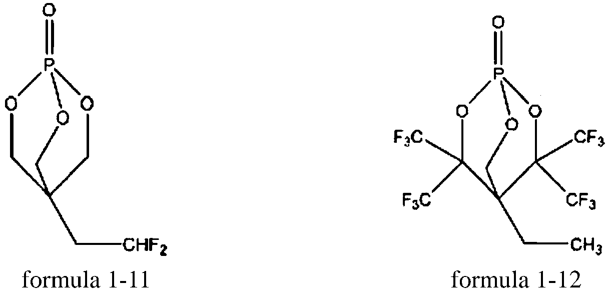

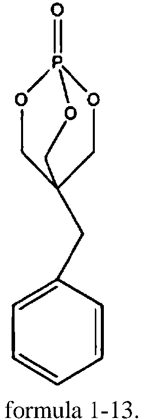

The compounds represented by formula 1-1 to 1-13 provided in the present application have suitable substituents, which help to further improve the porosity and stability of the SEI film.

In one specific embodiment, considering the effectiveness of the first additive, a content of the first additive is generally not less than 0.1%. However, an excessive amount of the first additive will increase the viscosity and ionic conductivity of the electrolytic solution, affecting the capacity and impedance of the battery. Therefore, in the electrolytic solution, the mass percentage of the first additive ranges from 0.1% to 10% of the total mass of the electrolytic solution, specifically it can be 0.1%, 0.2%, 0.5%, 0.8%, 1.0%, 2.0%, 3.0%, 4.0%, 5.0%, 6.0%, 7.0%, 8.0%, 9.0%, 10.0%, or any range formed between any two of these values.

Further, the mass percentage of the first additive ranges from 0.5% to 5% of the total mass of the electrolytic solution.

In one specific embodiment, the electrolytic solution further includes a second additive. The second additive is a film-forming additive, specifically selected from the group consisting of vinylene carbonate, ethylene sulfate, vinyl ethylene carbonate, 1,3-propanesultone, fluoroethylene carbonate, and a combination thereof. Based on the first additive shown in formula 1, the combined use with the second additive helps to further improve the high-temperature and low-temperature performance of the battery.

Further, the second additive tends to generate gas severely under high-temperature conditions, affecting the high-temperature storage performance and cycle performance of the battery. Therefore, the content of the second additive should not be too high. Specifically, the mass ratio of the first additive to the second additive ranges from 1:0.1 to 1:3.0, specifically it can be 1:0.1, 1:0.2, 1:0.5, 1:1.0, 1:1.2, 1:1.5, 1:1.8, 1:2.5, 1:2.2, 1:2.5, 1:2.8, or 1:3.0, or any range formed between any two of these values.

Further, the mass ratio of the first additive to the second additive ranges from 1:0.1 to 1:1.0.

The electrolytic solution provided by the present application further includes a non-aqueous organic solvent and a lithium salt. The types of the non-aqueous organic solvent and the lithium salt can be conventional materials in the art. Specifically, the non-aqueous organic solvent is selected from the group consisting of a carbonate compound, a carboxylate compound, an ether compound, a sulfone compound, and a combination thereof.

Specifically, the carbonate compound is selected from the group consisting of a cyclic carbonate, an acyclic carbonate, and a combination thereof. The cyclic carbonate is selected from the group consisting of ethylene carbonate (EC), propylene carbonate (PC), and a combination thereof; the acyclic carbonate is selected from the group consisting of dimethyl carbonate (DMC), ethyl methyl carbonate (EMC), diethyl carbonate (DEC), methyl propyl carbonate (MPC), and a combination thereof.

The carboxylate compound includes a cyclic carboxylate and an acyclic carboxylate. The cyclic carboxylate is selected from the group consisting of γ-butyrolactone, γ-valerolactone, γ-hexanolactone, ε-caprolactone, and a combination thereof; the acyclic carboxylate is selected from the group consisting of methyl acetate, ethyl acetate, n-propyl acetate, isopropyl acetate, n-butyl acetate, isobutyl acetate, tert-butyl acetate, methyl propionate (PP), ethyl propionate, n-propyl propionate, isopropyl propionate, n-butyl propionate, isobutyl propionate, tert-butyl propionate, methyl butyrate, ethyl butyrate, n-propyl butyrate, isopropyl butyrate, methyl isobutyrate, ethyl isobutyrate, n-propyl isobutyrate, isopropyl isobutyrate, and a combination thereof.

The ether compound can be an acyclic ether with 3 to 10 carbon atoms, or a cyclic ether with 3 to 6 carbon atoms. For example, the acyclic ether with 3 to 10 carbon atoms is selected from the group consisting of diethyl ether, bis(2-fluoroethyl) ether, bis(2,2-difluoroethyl) ether, bis(2,2,2-trifluoroethyl) ether, ethyl(2-fluoroethyl) ether, ethyl(2,2,2-trifluoroethyl) ether, ethyl(1,1,2,2-tetrafluoroethyl) ether, (2-fluoroethyl)(2,2,2-trifluoroethyl) ether, (2-fluoroethyl)(1,1,2,2-tetrafluoroethyl) ether, (2,2,2-trifluoroethyl)(1,1,2,2-tetrafluoroethyl) ether, ethyl n-propyl ether, ethyl(3-fluoropropyl) ether, ethyl(3,3,3-trifluoropropyl) ether, ethyl(2,2,3,3-tetrafluoropropyl) ether, ethyl(2,2,3,3,3-pentafluoropropyl) ether, 2-fluoroethyl n-propyl ether, (2-fluoroethyl)(3-fluoropropyl) ether, (2-fluoroethyl)(3,3,3-trifluoropropyl) ether, (2-fluoroethyl)(2,2,3,3-tetrafluoropropyl) ether, (2-fluoroethyl)(2,2,3,3,3-pentafluoropropyl) ether, 2,2,2-trifluoroethyl n-propyl ether, (2,2,2-trifluoroethyl)(3-fluoropropyl) ether, (2,2,2-trifluoroethyl)(3,3,3-trifluoropropyl) ether, (2,2,2-trifluoroethyl)(2,2,3,3-tetrafluoropropyl) ether, (2,2,2-trifluoroethyl)(2,2,3,3,3-pentafluoropropyl) ether, 1,1,2,2-tetrafluoroethyl n-propyl ether, (1,1,2,2-tetrafluoroethyl)(3-fluoropropyl) ether, (1,1,2,2-tetrafluoroethyl)(3,3,3-trifluoropropyl) ether, (1,1,2,2-tetrafluoroethyl)(2,2,3,3-tetrafluoropropyl) ether, (1,1,2,2-tetrafluoroethyl)(2,2,3,3,3-pentafluoropropyl) ether, di-n-propyl ether, (n-propyl)(3-fluoropropyl) ether, (n-propyl)(3,3,3-trifluoropropyl) ether, (n-propyl)(2,2,3,3-tetrafluoropropyl) ether, (n-propyl)(2,2,3,3,3-pentafluoropropyl) ether, bis(3-fluoropropyl) ether, (3-fluoropropyl)(3,3,3-trifluoropropyl) ether, (3-fluoropropyl)(2,2,3,3-tetrafluoropropyl) ether, (3-fluoropropyl)(2,2,3,3,3-pentafluoropropyl) ether, bis(3,3,3-trifluoropropyl) ether, (3,3,3-trifluoropropyl)(2,2,3,3-tetrafluoropropyl) ether, (3,3,3-trifluoropropyl)(2,2,3,3,3-pentafluoropropyl) ether, bis(2,2,3,3-tetrafluoropropyl) ether, (2,2,3,3-tetrafluoropropyl)(2,2,3,3,3-pentafluoropropyl) ether, bis(2,2,3,3,3-pentafluoropropyl) ether, di-n-butyl ether, dimethoxymethane, methoxyethoxymethane, methoxy(2-fluoroethoxy)methane, methoxy(2,2,2-trifluoroethoxy)methane, methoxy(1,1,2,2-tetrafluoroethoxy)methane, diethoxymethane, ethoxy(2-fluoroethoxy)methane, ethoxy(2,2,2-trifluoroethoxy)methane, ethoxy(1,1,2,2-tetrafluoroethoxy)methane, bis(2-fluoroethoxy)methane, (2-fluoroethoxy)(2,2,2-trifluoroethoxy)methane, (2-fluoroethoxy)(1,1,2,2-tetrafluoroethoxy)methane, bis(2,2,2-trifluoroethoxy)methane, (2,2,2-trifluoroethoxy)(1,1,2,2-tetrafluoroethoxy)methane, bis(1,1,2,2-tetrafluoroethoxy)methane, dimethoxyethane, methoxyethoxyethane, methoxy(2-fluoroethoxy)ethane, methoxy(2,2,2-trifluoroethoxy)ethane, methoxy(1,1,2,2-tetrafluoroethoxy)ethane, diethoxyethane, ethoxy(2-fluoroethoxy)ethane, ethoxy(2,2,2-trifluoroethoxy)ethane, ethoxy(1,1,2,2-tetrafluoroethoxy)ethane, bis(2-fluoroethoxy)ethane, (2-fluoroethoxy)(2,2,2-trifluoroethoxy)ethane, (2-fluoroethoxy)(1,1,2,2-tetrafluoroethoxy)ethane, bis(2,2,2-trifluoroethoxy)ethane, (2,2,2-trifluoroethoxy)(1,1,2,2-tetrafluoroethoxy)ethane, bis(1,1,2,2-tetrafluoroethoxy)ethane, ethylene glycol di-n-propyl ether, ethylene glycol di-n-butyl ether, ethylene glycol dimethyl ether, diethylene glycol dimethyl ether, and a combination thereof; the cyclic ether with 3 to 6 carbon atoms is selected from the group consisting of tetrahydrofuran, 2-methyltetrahydrofuran, 3-methyltetrahydrofuran, 1,3-dioxolane, 2-methyl-1,3-dioxolane, 4-methyl-1,3-dioxolane, 1,4-dioxane, and a combination thereof.

Further, some hydrogen atoms in the molecular structure of the ether compound are optionally substituted by fluorine.

When the ether compound is present as an auxiliary solvent, in the case where the negative electrode active material is a carbonaceous material, it is easy to avoid the problem of capacity decrease caused by co-intercalation of the ether compound with lithium ions.

The sulfone compound is selected from the group consisting of dimethyl sulfone, ethyl methyl sulfone, diethyl sulfone, n-propyl methyl sulfone, isopropyl methyl sulfone, n-butyl methyl sulfone, tert-butyl methyl sulfone, monofluoromethyl methyl sulfone, difluoromethyl methyl sulfone, trifluoromethyl methyl sulfone, monofluoroethyl methyl sulfone, difluoroethyl methyl sulfone, trifluoroethyl methyl sulfone, pentafluoroethyl methyl sulfone, ethyl monofluoromethyl sulfone, ethyl difluoromethyl sulfone, ethyl trifluoromethyl sulfone, ethyl trifluoroethyl sulfone, ethyl pentafluoroethyl sulfone, trifluoromethyl n-propyl sulfone, trifluoromethyl isopropyl sulfone, trifluoroethyl n-butyl sulfone, trifluoroethyl tert-butyl sulfone, trifluoromethyl n-butyl sulfone, trifluoromethyl tert-butyl sulfone, and a combination thereof; when the sulfone compound is present as an auxiliary solvent, it can improve the cycle performance and cycle retention performance of the battery, reduce the solution viscosity, and improve the electrochemical performance.

In a preferred embodiment, the solvent used in the present application simultaneously includes a cyclic organic solvent and an acyclic organic solvent. The following lists optional solvent combinations:
The non-aqueous organic solvent includes ethylene carbonate (EC), propylene carbonate (PC), diethyl carbonate (DEC), and methyl propionate (PP), and a mass ratio of EC, PC, DEC, and PP ranges from 1 to 10:1 to 10:1 to 10:1 to 10; further, the mass ratio of EC, PC, DEC, and PP ranges from 1 to 10:1:1 to 10:1 to 10.

The non-aqueous organic solvent includes ethylene carbonate (EC), diethyl carbonate (DEC), and ethyl methyl carbonate (EMC), and a mass ratio of EC, DEC, and EMC ranges from 1:0.1 to 10:0.1 to 10; further, the mass ratio of EC, DEC, and EMC ranges from 1:0.2 to 5:0.2 to 5; even further, the mass ratio of EC, DEC, and EMC ranges from 1:0.5 to 2:0.5 to 2.

The non-aqueous organic solvent includes ethylene carbonate (EC), propylene carbonate (PC), and ethyl methyl carbonate (EMC), and a mass ratio of EC, PC, and EMC ranges from 1:0.1 to 10:0.1 to 10; further, the mass ratio of EC, PC, and EMC ranges from 1:0.2 to 5:0.2 to 5; even further, the mass ratio of EC, PC, and EMC ranges from 1:0.5 to 2:0.5 to 2.

The non-aqueous organic solvent includes ethylene carbonate (EC), dimethyl carbonate (DMC), and ethyl methyl carbonate (EMC), and a mass ratio of EC, DMC, and EMC ranges from 1:0.1 to 10:0.1 to 10; further, the mass ratio of EC, DMC, and EMC ranges from 1:0.2 to 5:0.2 to 5; even further, the mass ratio of EC, DMC, and EMC ranges from 1:0.5 to 2:0.5 to 2.

In the present application, the lithium salt may be selected from the group consisting of an inorganic lithium salt, a lithium carboxylate, a lithium sulfonate, a lithium imide, a methylated lithium, a lithium borate, a lithium oxalate, a fluorine-containing organic lithium salt, and a combination thereof. Specifically, the inorganic lithium salt is selected from the group consisting of LiPF₆, LiBF₄, LiClO₄, LiAlF₄, LiSbF₆, LiTaF₆, LiWF₇, and a combination thereof; the lithium carboxylate is selected from the group consisting of HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li, CF₃CF₂CF₂CF₂CO₂Li, and a combination thereof; the lithium sulfonate is selected from the group consisting of FSO₃Li, CH₃SO₃Li, CH₂FSO₃Li, CHF₂SO₃Li, CF₃SO₃Li, CF₃CF₂SO₃Li, CF₃CF₂CF₂SO₃Li, CF₃CF₂CF₂CF₂SO₃Li, and a combination thereof; the lithium imide is selected from the group consisting of LiN(FCO)₂, LiN(FCO)(FSO₂), lithium bis(fluorosulfonyl)imide LiN(FSO₂)₂, LiN(FSO₂)(CF₃SO₂), lithium bis(trifluoromethanesulfonyl)imide LiN(CF₃SO₂)₂, LiN(C₂F₅SO₂)₂, lithium 1,1,2,2-tetrafluoroethane-1,2-disulfonimide, lithium 1,1,2,2,3,3-hexafluoropropane-1,3-disulfonimide, LiN(CF₃SO₂)(C₄F₉SO₂), and a combination thereof; the methylated lithium salt is selected from the group consisting of LiC(FSO₂)₃, LiC(CF₃SO₂)₃, LiC(C₂F₅SO₂)₃, and a combination thereof; the lithium borate is selected from the group consisting of lithium difluoro(oxalato)borate, lithium bis(oxalato)borate, and a combination thereof; the lithium oxalate is selected from the group consisting of lithium tetrafluoro(oxalato)phosphate, lithium difluorobis(oxalato)phosphate, lithium tris(oxalato)phosphate, and a combination thereof; the fluorine-containing organic lithium salt is selected from the group consisting of LiPF₄(CF₃)₂, LiPF₄(C₂F₅)₂, LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂, LiBF₂(C₂F₅SO₂)₂, and a combination thereof.

Further, the lithium salt is selected from the group consisting of lithium hexafluorophosphate, lithium tetrafluoroborate, lithium bis(oxalato)borate, lithium difluoro(oxalato)borate, lithium difluoro(oxalato)phosphate, lithium tetrafluoro(oxalato)phosphate, lithium bis(fluorosulfonyl)imide, lithium bis(trifluoromethanesulfonyl)imide, and a combination thereof.

Further, the concentration of the lithium salt ranges from 0.5 M to 2 M; even further, the concentration of the lithium salt ranges from 0.5 M to 1.5 M; still further, the concentration of the lithium salt ranges from 0.7 M to 1.5 M.

In addition, the electrolytic solution provided by the present application further includes other additives. The other additives are selected from the group consisting of a film-forming additive, a conductive additive, a flame retardant additive, an overcharge protection additive, an additive for improving high-temperature and low-temperature performance, and a combination thereof. The specific types and amounts can be set according to needs.

In one specific embodiment, the additive for improving high-temperature and low-temperature performance is selected from the group consisting of vinylene carbonate, ethylene sulfate, vinyl ethylene carbonate, 1,3-propanesultone, fluoroethylene carbonate, and a combination thereof. Using the compound shown in formula 1 in combination with the above additives helps to further optimize the high-temperature and low-temperature performance of the battery.

A second aspect of the present application provides a battery, including any one of the electrolytic solutions described above.

Based on the electrolytic solution provided by the first aspect of the present application, the battery provided by the present application has good high-temperature and low-temperature performance.

In one specific embodiment, the battery is a lithium-ion battery. In addition to the electrolytic solution provided by the first aspect of the present application, it further includes a positive electrode plate, a negative electrode plate, and a separator. Specifically:
The positive electrode plate includes a positive electrode current collector and a positive electrode active material layer disposed on the surface of the positive electrode current collector. The positive electrode active material layer includes a positive electrode active material, a conductive agent, and a binder. The positive electrode current collector is generally aluminum foil. The positive electrode active material is selected from lithium transition metal oxides, for example, selected from the group consisting of LiCoO₂, LiMn₂O₄, LiMnO₂, Li₂MnO₄, LiFePO₄, Li₁₊ₐMn₁₋ₓMₓO₂, LiCo₁₋ₓMₓO₂, LiFe₁₋ₓMₓPO₄, and Li₂Mn₁₋ₓO₄, and M is selected from the group consisting of Ni, Co, Mn, Al, Cr, Mg, Zr, Mo, V, Ti, B, F, and a combination thereof, 0 ≤ a < 0.2, 0 ≤ x < 1.

The negative electrode plate includes a negative electrode current collector and a negative electrode active material layer disposed on the surface of the negative electrode current collector. The negative electrode active material layer includes a negative electrode active material, a conductive agent, and a binder. The negative electrode current collector is generally copper foil. The negative electrode active material is selected from the group consisting of a carbonaceous material, a silicon-carbon material, an alloy material, a lithium-containing metal composite oxide, and a combination thereof.

The selection of the conductive agent and the binder in the positive electrode active material layer and the negative electrode active material layer can be conventional materials in the art.

The separator is selected from the group consisting of polyolefin, aromatic polyamide, polytetrafluoroethylene, polyethersulfone, and a combination thereof, which can be specifically set according to needs.

The following detailed description of the solutions provided by the present application is combined with specific embodiments:

### Example 1

The electrolytic solution provided in this embodiment includes a non-aqueous organic solvent, a lithium salt, and an additive. The non-aqueous organic solvent includes ethylene carbonate (EC), propylene carbonate (PC), methyl propionate (PP), and diethyl carbonate (DEC), and a mass ratio of EC:PC:PP:DEC is 3:2:5:5; the lithium salt is LiPF₆, and its concentration is 1 mol/L; the additive has the structure shown in formula 1-1, and its mass percentage is 1.0% of the total mass of the electrolytic solution.

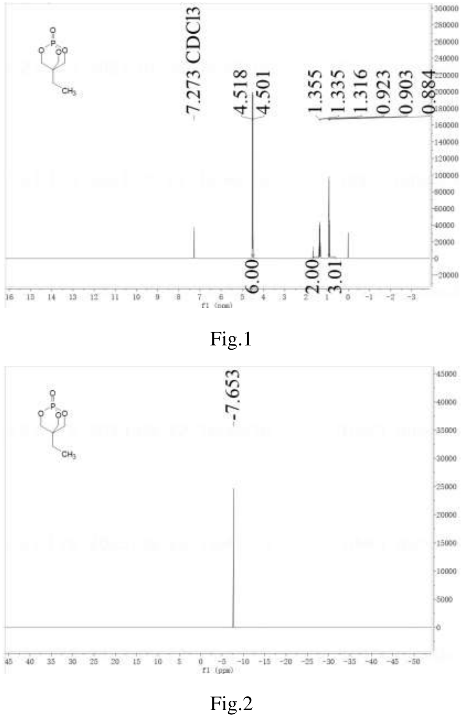

The preparation method of the compound shown in formula 1-1 was as follows: 5 g of 2-ethyl-2-(hydroxymethyl)-1,3-propanediol was added to a three-necked flask, then 25 mL of 1,4-dioxane was added, and the mixture was heated to 95 C under a nitrogen atmosphere and reacted with an excess of phosphorus oxychloride for 4 hours. After completion, the solvent was removed by evaporation, and the obtained crude product was recrystallized with distilled water, then the resultant was dried under vacuum at 70 C to obtain a white solid. The white solid was subjected to NMR analysis. The obtained H NMR spectrum and P NMR spectrum are shown in FIG. 1 and FIG. 2, respectively, confirming that the compound shown in formula 1-1 was indeed synthesized. The reaction involved is as follows:

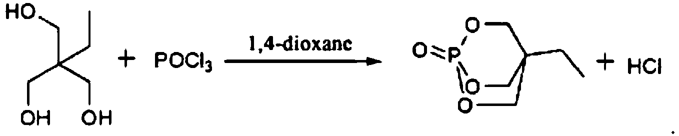

The electrolytic solution formulations provided in Examples 2 to 16 and Comparative Examples 1 to 6 are substantially the same as that in Example 1, with the differences being: the type of the first additive used in Examples 2 to 9 is different; the volume ratio of the non-aqueous organic solvent in Example 10 is different; the composition of the non-aqueous organic solvent in Example 11 is different; the type of lithium salt in Example 12 is different; the content of the first additive used in Examples 13 to 16 is different; the additive with the structure shown in formula 1 is not added in Comparative Examples 1 to 2; the additives used in Comparative Examples 3 to 6 are compounds shown in formula 2 to formula 4. The specific differences are listed in Table 1.

Examples 17 to 20 further include a second additive; the electrolytic solution formulations provided in Examples 21 to 45 and Comparative Examples 7 to 9 are substantially the same as that in Example 17, with the differences being: the contents of the first additive and the second additive in Examples 21 to 33 are different; the volume ratio of the non-aqueous organic solvent in Example 34 is different; the type of the first additive in Examples 35 to 45 is different; only the second additive is included and the first additive is not included in Comparative Examples 7 to 9. The specific differences are listed in Table 2.

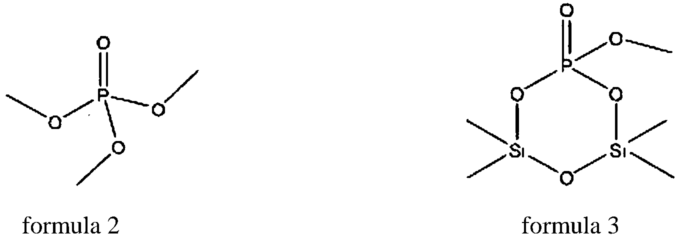

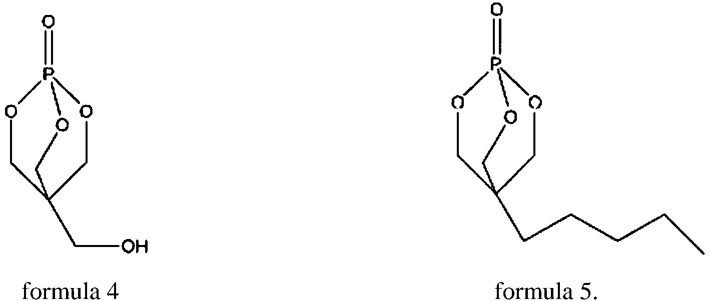

**Table 1 Composition of the electrolytic solutions provided by Examples 1 to 16 and Comparative Examples 1 to 6**

| | Basic electrolytic solution | First additive | First additive content |
|---|---|---|---|
| Example 1 | EC:PC:PP:DEC=3:2:5:5, 1mol/L LiPF6 | formula 1-1 | 1.0% |
| Example 2 | EC:PC:PP:DEC=3:2:5:5, 1mol/L LiPF6 | formula 1-2 | 1.0% |
| Example 3 | EC:PC:PP:DEC=3:2:5:5, 1mol/L LiPF6 | formula 1-3 | 1.0% |
| Example 4 | EC:PC:PP:DEC=3:2:5:5, 1mol/L LiPF6 | formula 1-4 | 1.0% |
| Example 5 | EC:PC:PP:DEC=3:2:5:5, 1mol/L LiPF6 | formula 1-5 | 1.0% |
| Example 6 | EC:PC:PP:DEC=3:2:5:5, 1mol/L LiPF6 | formula 1-6 | 1.0% |
| Example 7 | EC:PC:PP:DEC=3:2:5:5, 1mol/L LiPF6 | formula 1-7 | 1.0% |
| Example 8 | EC:PC:PP:DEC=3:2:5:5, 1mol/L LiPF6 | formula 1-8 | 1.0% |
| Example 9 | EC:PC:PP:DEC=3:2:5:5, 1mol/L LiPF6 | formula 1-9 | 1.0% |
| Example 10 | EC:PC:PP:DEC=18:7:20:20, 1mol/L LiPF6 | formula 1-1 | 1.0% |
| Example 11 | EC:DEC:EMC=3:2:5, 1mol/L LiPF6 | formula 1-1 | 1.0% |
| Example 12 | EC:PC:PP:DEC=3:2:5:5, 1mol/L LiN(FSO2)2 | formula 1-1 | 1.0% |
| Example 13 | EC:PC:PP:DEC=3:2:5:5, 1mol/L LiPF6 | formula 1-1 | 0.5% |
| Example 14 | EC:PC:PP:DEC=3:2:5:5, 1mol/L LiPF6 | formula 1-1 | 2.0% |
| Example 15 | EC:PC:PP:DEC=3:2:5:5, 1mol/L LiPF6 | formula 1-1 | 5.0% |
| Example 16 | EC:PC:PP:DEC=3:2:5:5, 1mol/L LiPF6 | formula 1-1 | 10.0% |
| Comparative Example 1 | EC:PC:PP:DEC=3:2:5:5, 1mol/L LiPF6 | / | |
| Comparative Example 2 | EC:PC:PP:DEC=18:7:20:20, 1mol/L LiPF6 | / | |
| Comparative Example 3 | EC:PC:PP:DEC=3:2:5:5, 1mol/L LiPF6 | formula 2 | 1.0% |
| Comparative Example 4 | EC:PC:PP:DEC=3:2:5:5, 1mol/L LiPF6 | formula 3 | 1.0% |
| Comparative Example 5 | EC:PC:PP:DEC=3:2:5:5, 1mol/L LiPF6 | formula 4 | 1.0% |
| Comparative Example 6 | EC:PC:PP:DEC=3:2:5:5, 1mol/L LiPF6 | formula 5 | 1.0% |

**Table 2 Composition of the electrolytic solutions provided by Examples 17 to 45 and Comparative Examples 7 to 9**

| | Basic electrolytic solution | First additive | First additive content | Second additive | Second additive content | The ratio of the first additive to the second additive |
|---|---|---|---|---|---|---|
| Example 17 | EC:PC:PP:DEC=3:2:5:5 | formula 1-1 | 1.0% | Ethylene sulfate | 1.0% | 1.1 |
| Example 18 | EC:PC:PP:DEC=3:2:5:5 | formula 1-1 | 1.0% | Fluoroethylene carbonate | 1.0% | 1.1 |
| Example 19 | EC:PC:PP:DEC=3:2:5:5 | formula 1-1 | 1.0% | 1,3-Propanesultone | 1.0% | 1.1 |
| Example 20 | EC:PC:PP:DEC=3:2:5:5 | formula 1-1 | 1.0% | Vinylene carbonate | 1.0% | 1.1 |
| Example 21 | EC:PC:PP:DEC=3:2:5:5 | formula 1-1 | 0.50% | Vinylene carbonate VC | 0.50% | 1:1 |
| Example 22 | EC:PC:PP:DEC=3:2:5:5 | formula 1-1 | 0.50% | Vinylene carbonate VC | 1.00% | 1:2 |
| Example 23 | EC:PC:PP:DEC=3:2:5:5 | formula 1-1 | 0.50% | Vinylene carbonate VC | 1.50% | 1:3 |
| Example 24 | EC:PC:PP:DEC=3:2:5:5 | formula 1-1 | 1.00% | Vinylene carbonate VC | 0.50% | 1:0.5 |
| Example 25 | EC:PC:PP:DEC=3:2:5:5 | formula 1-1 | 1.00% | Vinylene carbonate VC | 2.00% | 1:2 |
| Example 26 | EC:PC:PP:DEC=3:2:5:5 | formula 1-1 | 2.00% | Vinylene carbonate VC | 1.00% | 1:0.5 |
| Example 27 | EC:PC:PP:DEC=3:2:5:5 | formula 1-1 | 2.00% | Vinylene carbonate VC | 2.00% | 1:1 |
| Example 28 | EC:PC:PP:DEC=3:2:5:5 | formula 1-1 | 2.00% | Vinylene carbonate VC | 4.00% | 1:2 |
| Example 29 | EC:PC:PP:DEC=3:2:5:5 | formula 1-1 | 0.05% | Vinylene carbonate VC | 0.05% | 1:1 |
| Example 30 | EC:PC:PP:DEC=3:2:5:5 | formula 1-1 | 4.00% | Vinylene carbonate VC | 2.00% | 1:0.5 |
| Example 31 | EC:PC:PP:DEC=3:2:5:5 | formula 1-1 | 5.00% | Vinylene carbonate VC | 2.50% | 1:0.5 |
| Example 32 | EC:PC:PP:DEC=3:2:5:5 | formula 1-1 | 1.00% | Vinylene carbonate VC | 3.00% | 1:3 |
| Example 33 | EC:PC:PP:DEC=3:2:5:5 | formula 1-1 | 1.00% | Vinylene carbonate VC | 4.00% | 1:4 |
| Example 34 | EC:DEC:EMC=3:2:5 | formula 1-1 | 1.00% | Vinylene carbonate VC | 1.00% | 1:1 |
| Example 35 | EC:PC:PP:DEC=3:2:5:5 | formula 1-9 | 1.00% | Vinylene carbonate | 0.50% | 1:0.5 |
| | | | | VC | | |
| Example 36 | EC:PC:PP:DEC=3:2:5:5 | formula 1-9 | 1.00% | Vinylene carbonate VC | 1.00% | 1:1 |
| Example 37 | EC:PC:PP:DEC=3:2:5:5 | formula 1-9 | 1.00% | Vinylene carbonate VC | 2.00% | 1:2 |
| Example 38 | EC:PC:PP:DEC=3:2:5:5 | formula 1-4 | 1.00% | Vinylene carbonate VC | 1.00% | 1:1 |
| Example 39 | EC:PC:PP:DEC=3:2:5:5 | formula 1-10 | 1.00% | Vinylene carbonate VC | 1.00% | 1:1 |
| Example 40 | EC:PC:PP:DEC=3:2:5:5 | formula 1-11 | 1.00% | Vinylene carbonate VC | 1.00% | 1:1 |
| Example 41 | EC:PC:PP:DEC=3:2:5:5 | formula 1-5 | 1.00% | Vinylene carbonate VC | 1.00% | 1:1 |
| Example 42 | EC:PC:PP:DEC=3:2:5:5 | formula 1-7 | 1.00% | Vinylene carbonate VC | 1.00% | 1:1 |
| Example 43 | EC:PC:PP:DEC=3:2:5:5 | formula 1-8 | 1.00% | Vinylene carbonate VC | 1.00% | 1:1 |
| Example 44 | EC:PC:PP:DEC=3:2:5:5 | formula 1-12 | 1.00% | Vinylene carbonate VC | 1.00% | 1:1 |
| Example 45 | EC:PC:PP:DEC=3:2:5:5 | formula 1-13 | 1.00% | Vinylene carbonate VC | 1.00% | 1:1 |
| Comparative Example 7 | EC:PC:PP:DEC=3:2:5:5 | / | | Vinylene carbonate VC | 0.50% | / |
| Comparative Example 8 | EC:PC:PP:DEC=3:2:5:5 | / | | Vinylene carbonate VC | 1.00% | / |
| Comparative Example 9 | EC:PC:PP:DEC=3:2:5:5 | / | | Vinylene carbonate VC | 2.00% | / |

The lithium-ion batteries were assembled using the electrolytic solutions provided in Examples 1-45 and Comparative Examples 1-9 with the positive electrode plate, separator, and negative electrode plate. The preparation method was as follows:
The positive electrode active material layer slurry was prepared by uniformly mixing the positive electrode material (NCM523), conductive agent SuperP (conductive carbon black), CNT (carbon nanotubes), and binder PVDF (polyvinylidene fluoride) in a mass ratio of 96.3:2:0.5:1.2. This slurry was coated onto the surface of aluminum foil, dried at 85 °C, and then cold-pressed. Subsequently, edge trimming, cutting, and slitting were performed. After slitting, the electrode was dried under vacuum at 95 °C for 12 hours, and tabs were welded to obtain the positive electrode plate with an areal density of 33 mg/cm².

The negative electrode active material layer slurry was prepared by uniformly mixing graphite, conductive agent SuperP, thickener CMC, and binder SBR (styrene-butadiene rubber emulsion) in a mass ratio of 95:1.5:1.0:2.5. This slurry was coated onto the surface of copper foil, dried at 85 °C, and then cold-pressed. Subsequently, edge trimming, cutting, and slitting were performed. After slitting, the electrode was dried under vacuum at 85 C for 12 hours, and tabs were welded to obtain the negative electrode plate with an areal density of 20.3 mg/cm².

The above positive electrode plate, separator, and negative electrode plate were assembled into a lithium-ion battery with a thickness of 4.7 mm, width of 55 mm, and length of 60 mm using a stacking process. The theoretical capacity was 1600 mAh, respectively. The battery was vacuum-baked at 75 C for 10 hours, and then the aforementioned electrolytic solution was injected. After standing for 24 hours, a pressure of 3 kg/cm² was applied, and the battery was charged at a constant current of 0.1 C for 6 hours, followed by aging at 45 C for 2 days. The battery was then charged at 0.1 C to 4.4 V and charged at constant voltage until the current dropped to 0.05 C (80 mA). Subsequently, it was discharged at 0.1 C to 3.0 V to obtain the initial coulombic efficiency. Charge and discharge cycles were performed at 0.5 C and 1 C for one week each. Finally, the battery was charged at 1 C to 3.8 V for storage, completing the battery fabrication.

The prepared lithium-ion batteries were subjected to high-temperature and low-temperature performance tests. The test methods are as follows, and the results are shown in Table 3:
Cycle test at 25 °C: At 25 °C, the battery was charged at a constant current of 1.0 C to 4.4 V, then charged at a constant voltage of 4.4 V until the cutoff current reached 0.05 C. Subsequently, the battery was discharged at a constant current of 1.0 C. The discharge capacity was recorded as C0. The charge-discharge steps were repeated for 500 cycles, and the discharge capacity at the 500th cycle was recorded as C500. The capacity retention rate was calculated as C500/C0*100.
Cycle test at 45 °C: At 45 °C, the battery was charged at a constant current of 1.0 C to 4.4 V, then charged at a constant voltage until the cutoff current reached 0.05 C. Subsequently, the battery was discharged at a constant current of 1.0 C. The discharge capacity was recorded as C0. The charge-discharge steps were repeated for 300 cycles, and the discharge capacity at the 300th cycle was recorded as C300.The capacity retention rate was calculated as C300/C0*100 %

Capacity retention rate test after storage for 14 days at 60 °C: At 25 °C, the battery was charged at a constant current of 1.0 C to 4.4 V, then charged at a constant voltage of 4.4 V until the cutoff current reached 0.05 C. Subsequently, the battery was discharged at a constant current of 1.0 C, and the discharge capacity was recorded as C0. At 25 °C, the battery was charged at a constant current of 1.0 C to 4.4 V, then charged at a constant voltage of 4.4 V until the cutoff current reached 0.05 C. The battery was then transferred to 60 °C and stored for 14 days. After storage, the battery was discharged at a constant current of 1.0 C, and the discharge capacity was recorded as C1. The capacity retention rate after storage for 14 days at 60 °C was calculated as C1/C0*100 % .

Low-temperature discharge test at -20 °C: At 25 °C, the battery was charged at a constant current of 1.0 C to 4.4 V, then charged at a constant voltage of 4.4 V until the cutoff current reached 0.05 C. Subsequently, the battery was discharged at a constant current of 0.5 C, and the discharge capacity was recorded as C0. At 25 °C, the battery was charged at a constant current of 1.0 C to 4.4 V, then charged at a constant voltage of 4.4 V until the cutoff current reached 0.05 C. The battery was then transferred to -20 °C and stood for 240 minutes. Then the battery was discharged at a constant current of 0.5 C, and the discharge capacity was recorded as C1. The -20 °C discharge rate was calculated as C1/C0*100%.

**Table 3 Performance test results of the batteries provided by Examples 1-45 and Comparative Examples 1-9**

| | Cyclic test at 25 °C | Cyclic test at 45 °C | Capacity retention rate test after storage for 14 days at 60 °C | Low-temperature discharge test at -20 °C |
|---|---|---|---|---|
| Example 1 | 89% | 75% | 52% | 73% |
| Example 2 | 88% | 74% | 51% | 72% |
| Example 3 | 89% | 74% | 52% | 72% |
| Example 4 | 91% | 77% | 55% | 75% |
| Example 5 | 86% | 73% | 50% | 70% |
| Example 6 | 83% | 71% | 46% | 68% |
| Example 7 | 92% | 79% | 58% | 66% |
| Example 8 | 91% | 78% | 56% | 63% |
| Example 9 | 87% | 74% | 51% | 73% |
| Example 10 | 88% | 74% | 51% | 71% |
| Example 11 | 88% | 72% | 54% | 74% |
| Example 12 | 82% | 70% | 51% | 65% |
| Example 13 | 82% | 69% | 50% | 65% |
| Example 14 | 85% | 68% | 53% | 69% |
| Example 15 | 69% | 60% | 48% | 50% |
| Example 16 | 66% | 58% | 43% | 46% |
| Example 17 | 91% | 82% | 85% | 82% |
| Example 18 | 95% | 85% | 82% | 80% |
| Example 19 | 94% | 81% | 89% | 82% |
| Example 20 | 95% | 86% | 89% | 84% |
| Example 21 | 89% | 79% | 80% | 76% |
| Example 22 | 91% | 81% | 84% | 79% |
| Example 23 | 91% | 80% | 85% | 78% |
| Example 24 | 93% | 83% | 84% | 81% |
| Example 25 | 92% | 85% | 83% | 82% |
| Example 26 | 90% | 82% | 86% | 80% |
| Example 27 | 92% | 83% | 85% | 82% |
| Example 28 | 89% | 80% | 81% | 79% |
| Example 29 | 82% | 72% | 70% | 70% |
| Example 30 | 86% | 76% | 73% | 72% |
| Example 31 | 70% | 60% | 50% | 51% |
| Example 32 | 93% | 82% | 80% | 77% |
| Example 33 | 91% | 81% | 78% | 73% |
| Example 34 | 91% | 80% | 82% | 80% |
| Example 35 | 94% | 85% | 86% | 78% |
| Example 36 | 96% | 87% | 90% | 80% |
| Example 37 | 93% | 86% | 84% | 77% |
| Example 38 | 92% | 81% | 81% | 79% |
| Example 39 | 94% | 82% | 80% | 83% |
| Example 40 | 90% | 80% | 81% | 77% |
| Example 41 | 91% | 81% | 82% | 80% |
| Example 42 | 93% | 82% | 84% | 79% |
| Example 43 | 95% | 81% | 83% | 78% |
| Example 44 | 92% | 84% | 83% | 81% |
| Example 45 | 91% | 80% | 85% | 76% |
| Comparative Example 1 | 69% | 55% | 35% | 38% |
| Comparative Example 2 | 68% | 53% | 32% | 36% |
| Comparative Example 3 | 79% | 65% | 42% | 49% |
| Comparative Example 4 | 77% | 63% | 46% | 51% |
| Comparative Example 5 | 76% | 65% | 44% | 55% |
| Comparative Example 6 | 88% | 74% | 51% | 52% |
| Comparative Example 7 | 75% | 59% | 52% | 55% |
| Comparative Example 8 | 80% | 65% | 60% | 62% |
| Comparative Example 9 | 78% | 62% | 56% | 57% |

According to Table 3, the high-temperature and low-temperature performance of the lithium-ion batteries provided in Examples 1-9 and Comparative Examples 3-6 is superior to that of Comparative Examples 1-2, indicating that the additive helps to improve the high-temperature and low-temperature performance of the battery, especially the low-temperature discharge performance. Based on Examples 1-9, it can be seen that additives with different structures affect the performance of the lithium-ion battery. For example, when the electrolytic solution contains a compound with the structure shown in formula 1-4, the high-temperature performance of the lithium-ion battery is significantly improved, which is related to the high electronegativity of the F element and the high stability of the formed interface film. When the electrolytic solution contains compounds with the structures shown in formula 1-7 and 1-8, the cycle and storage performance of the lithium-ion battery are significantly improved, which is related to the electrophoretic polymerization of double or triple bonds forming a dense interface film. The number of carbon atoms also affects the performance of the lithium-ion battery. For instance, compared to compounds with structures shown in formula 4-5, compounds with structures shown in formula 1-1 to 1-3 result in better battery performance. This should be related to the porosity of the interface film being too high or too low caused by the R1 carbon chain being too short or too long. For example, with a hydroxymethyl, the chain is too short, forming larger voids that allow more electrolytic solution to contact the surface, leading to oxidative decomposition, electrode polarization. Additionally, under high voltage, HF generated from electrolytic solution decomposition more easily corrodes the electrode, causing structural damage to the electrode, thereby resulting in decreased room-temperature and high-temperature cycle performance and high-temperature storage performance. With a pentyl, the chain is too long, forming a smaller porosity, making it difficult for Li+ to transport through the interface, thus leading to decreased low-temperature performance.

According to Examples 10-12 and Example 34, when the composition of the non-aqueous organic solvent and the type of lithium salt in the base electrolytic solution are different, the battery's high-temperature and low-temperature performance shows similar effects, indicating that the compound represented by formula 1 provided in the present application has good compatibility and is suitable for use in different electrolytic solutions.

According to Examples 13-16, as the content of the additive shown in formula 1-1 in the electrolytic solution gradually increases, the high-temperature and low-temperature performance of the battery improves. However, when the additive content increases to 5%, the battery performance decreases. Therefore, the preferred content of the additive represented by formula 1 ranges from 0.5% to 2%, and more preferably 1%.

According to Examples 17-20 and Comparative Examples 7-9, the additive shown in formula 1-1 has good compatibility with the second additive, which helps to further improve the high-temperature and low-temperature performance of the battery, and the second additive is preferably vinylene carbonate VC.

According to Examples 21-33, when the content ratio of the first additive to the second additive is around 1:1, it helps to further improve the high-temperature and low-temperature performance of the lithium-ion battery.

According to Examples 35-37, in the presence of the second additive, compared to the first additive shown in formula 1-1, using the first additive shown in formula 1-9, although the low-temperature performance is somewhat affected, the room-temperature/high-temperature performance of the lithium-ion battery is improved.

According to Examples 38-45, other first additives have effects similar to the compound shown in formula 1-1.

Finally, it should be noted that the above embodiments are only used to illustrate the technical solutions of the present application and not to limit them. Although the present application has been described in detail with reference to the foregoing embodiments, those of ordinary skill in the art should understand that they can still modify the technical solutions described in the foregoing embodiments or make equivalent substitutions for some or all of the technical features. Such modifications or substitutions do not cause the essence of the corresponding technical solutions to depart from the scope of the technical solutions of the embodiments of the present application.

## Claims

1. An electrolytic solution, wherein the electrolytic solution comprises a first additive, the first additive has a structure shown in formula 1: 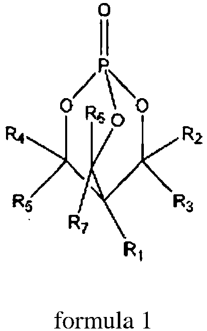 in formula 1, R₁ is selected from the group consisting of H, halogen, phenyl, alkylene-phenyl, substituted or unsubstituted C1 to C10 saturated hydrocarbon group, substituted or unsubstituted C2 to C10 alkenyl, and substituted or unsubstituted C2 to C10 alkynyl, and the substituent is selected from the group consisting of hydroxyl, halogen, and a combination thereof; R₂, R₃, R₄, R₅, R₆, and R₇ are each independently selected from the group consisting of H, halogen, C1 to C10 saturated hydrocarbon group, C2 to C10 alkenyl, C2 to C10 alkynyl, halogen-substituted C1 to C10 saturated hydrocarbon group, halogen-substituted C2 to C10 alkenyl, and halogen-substituted C2 to C10 alkynyl.

2. The electrolytic solution according to claim 1, wherein R₁ is selected from the group consisting of alkylene-phenyl, substituted or unsubstituted C1 to C10 saturated hydrocarbon group, substituted or unsubstituted C2 to C10 alkenyl, and substituted or unsubstituted C2 to C10 alkynyl, and the substituent is selected from the group consisting of hydroxyl, halogen, and a combination thereof.

3. The electrolytic solution according to claim 1 or 2, wherein R₁ is selected from the group consisting of substituted or unsubstituted C2 to C4 saturated hydrocarbon group, C2 to C4 alkenyl, and C2 to C4 alkynyl, and the substituent is selected from the group consisting of hydroxyl, halogen, and a combination thereof.

4. The electrolytic solution according to any one of claims 1 to 3, wherein R₂, R₃, R₄, R₅, R₆, and R₇ are each independently selected from the group consisting of H, C1 to C10 saturated hydrocarbon group, and halogen-substituted C1 to C10 hydrocarbon group.

5. The electrolytic solution according to any one of claims 1 to 4, wherein the first additive is selected from the group consisting of compounds shown in formula 1-1 to formula 1-13, and a combination thereof:

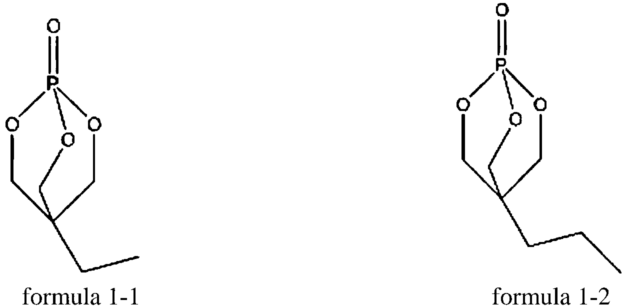

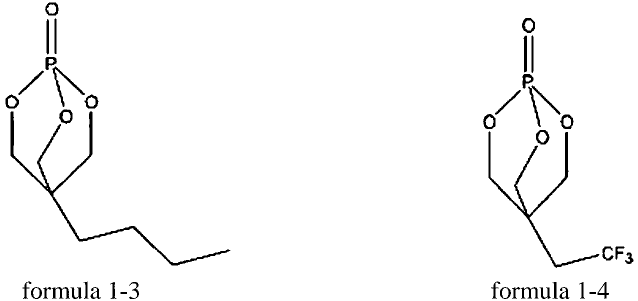

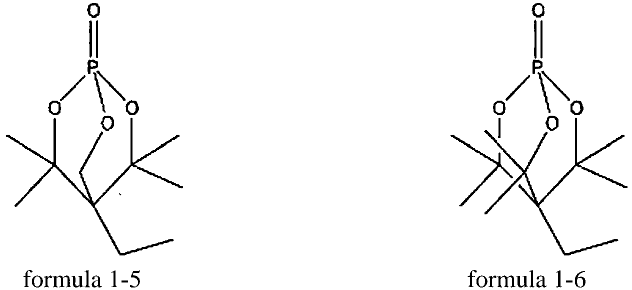

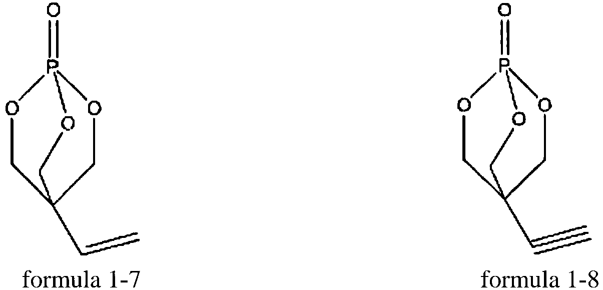

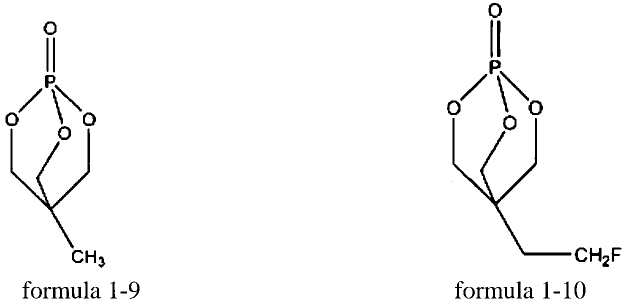

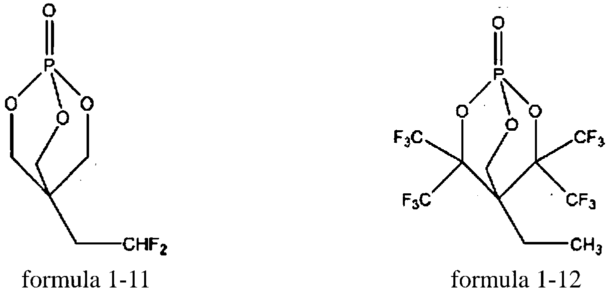

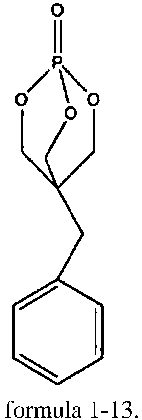

6. The electrolytic solution according to any one of claims 1 to 5, wherein a mass percentage of the first additive ranges from 0.1% to 10% of a total mass of the electrolytic solution.

7. The electrolytic solution according to any one of claims 1 to 6, wherein the electrolytic solution further comprises a second additive, and the second additive is selected from the group consisting of vinylene carbonate, ethylene sulfate, vinyl ethylene carbonate, 1,3-propanesultone, fluoroethylene carbonate, and a combination thereof.

8. The electrolytic solution according to claim 7, wherein a mass ratio of the first additive to the second additive ranges from 1:0.1 to 1:3.0.

9. The electrolytic solution according to any one of claims 1 to 8, wherein the electrolytic solution further comprises a non-aqueous organic solvent and a lithium salt.

10. The electrolytic solution according to claim 9, wherein the lithium salt is selected from the group consisting of an inorganic lithium salt, a lithium carboxylate, a lithium sulfonate, a lithium imide, a methylated lithium salt, a lithium borate, a lithium oxalate, a fluorine-containing organic lithium salt, and a combination thereof.

11. The electrolytic solution according to claim 9 or 10, wherein a concentration of the lithium salt ranges from 0.5 M to 2 M.

12. The electrolytic solution according to claim 9, wherein the non-aqueous organic solvent is selected from the group consisting of a carbonate compound, a carboxylate compound, an ether compound, a sulfone compound, and a combination thereof.

13. The electrolytic solution according to any one of claims 1 to 12, wherein the electrolytic solution further comprises a third additive, and the third additive is selected from the group consisting of a film-forming additive, a conductive additive, a flame retardant additive, an overcharge protection additive, an additive for improving high-temperature and low-temperature performance, and a combination thereof.

14. A battery, comprising the electrolytic solution according to any one of claims 1 to 13.
